# EUROPÄISCHE PATENTSCHRIFT

(11) **EP 2 379 771 B1**
(45) Veröffentlichungstag und Bekanntmachung des Hinweises auf die Patenterteilung: **05.09.2018**
(21) Anmeldenummer: 09801980.5
(22) Anmeldetag: 23.12.2009
(51) Int. Cl.: C23C 18/12

(54) **METALLISCHE GEGENSTÄNDE MIT GLASARTIGEN ODER GLASKERAMISCHEN PIGMENTIERTEN SCHUTZSCHICHTEN**
VITREOUS AND/OR CERAMIC PROTECTIVE COATING ON METALIC ARTICLE
ARTICLES MÉTALLIQUES À COUCHES PROTECTRICES VITREUSES OU VITROCÉRAMIQUES PIGMENTÉES, À HAUTE RÉSISTANCE CHIMIQUE

(30) Priorität: 24.12.2008 DE 102008063161
(43) Veröffentlichungstag der Anmeldung: 26.10.2011
(73) Patentinhaber: EPG (Engineered nanoProducts Germany) AG, 64347 Griesheim (DE)
(72) Erfinder: SCHMIDT, Helmut, 66130 Saarbrücken-Güdingen (DE); SCHMIDT, Carsten, 66119 Saarbrücken (DE); DEMBSKI, Thomas, F-57470 Hombourg-Haut (FR)
(74) Vertreter: Held, Stephan
(86) Internationale Anmeldenummer: PCT/EP2009/067860
(87) Internationale Veröffentlichungsnummer: WO 2010/072815

(56) Entgegenhaltungen:
- EP-A1- 1 284 307
- WO-A2-2008/099008
- DE-A1-102006 050 102

## Beschreibung

Glasartige oder glaskeramische Schutzschichten werden auf metallische Oberflächen in der Regel über einen so genannten Emaillierungsprozess aufgebracht. Emails sind Gläser, die bei höheren Temperaturen relativ leicht aufschmelzen und dann einen zusammenhängenden Überzug auf der Metalloberfläche bilden. Die Aufschmelztemperaturen liegen in der Regel zwischen 750 und 800°C, wenn Emails mit einer ausreichenden chemischen Beständigkeit, zum Beispiel gegen kochendes Wasser, schwache Säuren oder alkalischen, kochende oder garende Lebensmittel etc., erreicht werden sollen. Letzteres ist besonders bei Anwendungen im Lebensmittelbereich erforderlich

Das Auftragen der Emails erfolgt im Nassverfahren, wobei in der Regel eine wässrige Aufschlämmung oder Suspension (Engobe) des fein gemahlenen Glaspulvers (Fritte) auf die Metalloberfläche aufgetragen (z.B. durch Tauchen oder Aufsprühen), getrocknet und anschließend bei den oben genannten Temperaturen aufgeschmolzen wird. Zur Erzielung eines zusammenhängenden, dichten, porenfreien Überzuges werden dabei Schichtdicken von 50 bis 100 µm benötigt. Wegen der hohen Viskosität von Gläsern und den, besonders bei Silikatgläsern existierenden hohen Erweichungstemperaturen werden, wie eingangs erwähnt, Aufschmelztemperaturen von deutlich über 700°C benötigt. Die Erweichungstemperatur ist dabei besonders stark vom Kieselsäuregehalt des Glases abhängig. Hohe Kieselsäuregehalte führen zu einer hohen Erweichungstemperatur und bedingen eine hohe chemische Resistenz des Glases, Hohe Alkaligehalte dagegen bedingen eine niedrige Erweichungstemperatur, führen aber zu einer niedrigen chemischen Resistenz (niedrige hydrolytische Klasse). Insbesondere für die Anwendung solcher Schichten im Bereich aggressiver Medien (zum Beispiel säuren) oder im Lebensmittelbereich, insbesondere dann, wenn zum Beispiel Spülmaschinenfestigkeit gefordert ist, sind daher die genannten niedrig schmelzende Schichten ungeeignet. Dies ist auch einer der Gründe dafür, dass zum Beispiel Email auf Aluminium im Hausgerätebereich, insbesondere bei Kochgeschirr, nicht zum Einsatz kommt, weil Aluminium schon bei Temperaturen etwas über 600°C. schmilzt. Analog sind die Verhältnisse beim Magnesium oder bei Magnesium-Aluminium-Legierungen Das gleiche gilt auch für Metallbauteile, die aus mehreren Komponenten zusammengesetzt sind, wenn eine dieser Komponenten aus dem Bereich der oben genannten Leichtmetalle stammt.

Darüber hinaus ist die Farbgebung für viele Anwendungen von ausschlaggebender Bedeutung, da die Frage eines attraktiven Designs für viele Gegenstände, besonders im Gebrauchsgüterbereich, von hoher Bedeutung ist. Im Lebensmittelbereich spielt dabei insbesondere die Frage der Lebensmittelverträglichkeit und der Toxikologie eine hervorragende Rolle. Aus diesem Grunde ist die chemische Resistenz eines glasartigen Überzuges dann von besonderer Bedeutung, insbesondere wenn vermieden werden muss, dass Komponenten, zum Beispiel Metallionen, aus farbgebenden Pigmenten ausgelaugt werden.

Der Erfindung lag deshalb die Aufgabe zugrunde, metallische Substrate mit einer farbigen glasartigen Beschichtung mit verbesserten chemischen Eigenschaften, insbesondere verbesserter Alkalibeständigkeit bis hin zu Spülmaschinenfestigkeit, bereitzustellen.

Wichtige Voraussetzungen für die Erzielung korrosionsfester Schichten ist eine hohe Beständigkeit des Matrixmaterials der Beschichtung, insbesondere gegen Alkalien, eine Riss- und Pinhole-freie Verdichtung, für die auch ein ausreichend angepasster Ausdehnungskoeffizienten des Beschichtungsmaterials an das Substrat erforderlich ist. Es ist jedoch bekannt, dass bei pigmentierten Systemen, bei denen eine Schrumpfung der Beschichtungsmatrix unumgänglich ist, nicht schrumpfende, zum Beispiel oxidische Pigmente beim Sintern zu Spannungen und Rissbildung führen. Aus der einschlägigen Glasliteratur ist bekannt, dass die Alkalibeständigkeit von Silikatgläsern durch Zusatz von bestimmten Ionen (netzwerkstabilisierenden Komponenten) deutlich verbessert werden kann. Mögliche Lösungen für das Problem sind daher Glaszusammensetzungen, die solche Komponenten enthalten (z.B. Aluminiumoxid oder Titandioxid). Wie ebenfalls aus der Sol-Gel-Literatur bekannt, sind Sol-Gel-Beschichtungen mit solchen Multikomponentensystemen schwierig herzustellen, weisen außerordentlich kurze Topfzeit auf, sind in der Regel nur in stark sauren Lösungen stabil und daher technisch kaum praktikabel. Sollen derartige Systeme mit hohen Ausdehnungskoeffizienten hergestellt werden, um an die Ausdehnungskoeffizienten von Metallen angepasst zu sein (TCE ≈ 8 x 10⁻⁶ /K oder größer), so müssen die Alkaligehalte deutlich über das Maß üblicher Gläser (10 bis 15 Gewichtsprozent) hinaus erhöht werden, was wiederum mit einer starken Einbuße chemische Beständigkeit einhergeht.

DE 102006050102 A1 beschreibt ein metallisches Substrat, bei dem eine Oberfläche aus Leichtmetall mit einer alkalibeständigen Schutzschicht aus einer Oxidschicht aus Silizium und Bor als Basisschicht und einer Oxidschicht aus Silizium mit Pigmenten als glasartige Deckschicht versehen ist. Als Pigmente können oxidische Pigmente verwendet werden.

EP 1284307 A1 betrifft ein Verfahren zum Versehen einer metallischen Oberfläche mit einer glasartigen Schicht, bei der eine Alkalisilikat-haltige Beschichtungszusammensetzung auf ein metallisches Substrat aufgebracht und verdichtet wird. Die Beschichtungszusammensetzung kann mit mindestens einem Funktionsträger aus der Gruppe der temperaturbeständigen Farbstoffe und Pigmente, Metall- oder Nichtmetalloxide, färbenden Metallionen, Metall- oder Metallverbindungs-Kolloide und Metallionen, die unter Reduktionsbedingungen zu Metallkolloiden reagieren, vermischt werden.

WO 2008/099088 A2 beschreibt ein Verfahren zur Herstellung eines Substrats mit einer Metall-, Glas- oder Keramikoberfläche, die mit einer Interferenzpigmente enthaltenden glasartigen Schicht versehen ist. Das eingesetzte Interferenzpigmente enthaltende Beschichtungssol basiert auf der Hydrolyse und Polykondensation von Silanen in Anwesenheit von mindestens einer Verbindung aus der Gruppe der Oxide und Hydroxide der Alkali- und Erdalkalimetalle und/oder nanoskaligen SiO2-Teilchen.

In den Patentschriften US 6162498 und US 2008/0118745 sind Verfahren beschrieben, bei denen glasartige, relativ abriebsfeste und gegen Oxidationskorrosion (z.B. Anlaufen von Edelstahl) beständige Schichten erhalten werden. Das Verfahren umfasst
- die Herstellung einer Beschichtungslösung über Hydrolyse und Polykondensation eines oder mehrerer Silane in Gegenwart von kolloidalem Kieselsol und mindestens einer Komponente aus der Gruppe der Alkali- und Erdalkalioxide und -hydroxide;
- das Aufbringen der Beschichtungslösung auf eine Metalloberfläche zur Ausbildung einer Schicht;
- eine thermische Verdichtung zur Ausbildung eines glasartigen Films;
   in US 6162498 die Verwendung von Verdichtungstemperaturen zwischen 350 und 500°C;
- in US 2008/0118745 darüber hinaus die Bildung von formbaren glasartigen Schichten, über
- die Anwendung einer Alkalisilikat-haltigen Schicht durch die Verdichtung in einem Zweistufenprozess mit einer bevorzugten Temperatur von 500°C;
- die Herstellung von Schichtsystemen über Tauchen und Sprühen mit Schichten im Bereich von 5 bis 10 µm;
- das Auftragen der Beschichtungen auf Metalloberflächen und Metallkomponenten, insbesondere auf Edelstahl, aber auch auf Aluminium und Aluminiumlegierungen.

Die beschriebenen Systeme weisen einen hohen SiO₂-Gehalt auf, und sind daher lediglich gegen Säuren stabil, jedoch nicht im alkalischen Milieu, So können diese Schichten schon mit relativ verdünnter heißer Natronlauge quantitativ entfernt werden und sind in keinem Falle spülmaschinenbeständig, das heißt im Normalfall für den Lebensmittelbereich oder als Schutzschichten für Anwendungen bei höheren pH-Werten nicht geeignet.

Allerdings eignen sich diese Schichten auch für das Auftragen auf Aluminium und Aluminiumlegierungen, da ihre Verdichtungstemperaturen deutlich unterhalb von 600°C liegen; die chemische Beständigkeit im Hinblick auf Alkaliresistenz wird jedoch dadurch nicht verbessert, die Schichten eignen sich auch zum Beschichten von Komponenten und Bauteilen, die aus Aluminium oder Aluminiumlegierungen und anderen Metallen zusammengesetzt sind, sei es in Form eines Laminats aus Metallblechen oder -platten, in Form eines Sandwichs oder seien es Bauteile mit Komponenten aus verschiedenen Metallen, die anderweitig miteinander verbunden oder gefügt sind (zum Beispiel verschraubt, verpresst oder vernietet).

Es wurde nun überraschenderweise gefunden, dass die oben geschilderten Nachteile, insbesondere die nicht ausreichende chemische Beständigkeit solcher Beschichtungswerkstoffe gemildert oder vermieden werden, wenn sie im Verbund mit Pigmenten, vorzugsweise plättchenförmigen Pigmenten, verwendet werden, insbesondere jedoch dann, wenn sie als Mehrfachschicht aufgetragen werden. Sie weisen dann eine deutlich erhöhte hydrolytische Stabilität auf und überstehen im Spülmaschinentest mehrere 100 Zyklen ohne Beeinträchtigung.

Darüber hinaus war es auch überraschend, dass mit den pigmentierten Beschichtungslösungen dicht sinternde Schichten erreicht werden, obwohl Sinterprozesse, bei denen eine temperaturbedingte Verdichtung des Matrixmaterials zwangsläufig zu Schrumpfungen führt, mit oxidischen (d.h. schon dicht gesinterten Additiven, die naturgemäß nicht mehr schrumpfen können), in aller Regel interne Rissbildung nach sich ziehen. Diese verschlechtern insbesondere die chemische Beständigkeit außerordentlich, da durch die Risse korrosive Flüssigkeiten in die Schicht eindringen und Korrosionsprozesse an der Metalloberfläche mit Ablöseerscheinungen in der Folge verursachen. Weiterhin war auch überraschend, dass die Schichtsysteme, bei denen eine Abschätzung der Ausdehnungskoeffizienten der Matrix aufgrund ihrer Zusammensetzung werte zwischen α = 1,0 und 4,0 x 10⁻⁶/K ergab, trotz der Differenzen zu den beschichteten Metallen (α > 10) keine Verschlechterung der Dichtigkeit der Schicht ergab. Zwar wurden im Rahmen der Erfindung Beschichtungslösungen mit Zusammensetzungen, die üblichen Kalknatrongläsern mit entsprechenden thermischen Eigenschaften entsprechen, hergestellt, aber wegen der oben beschriebenen Problematik nicht bevorzugt. Außerdem sind die Ausdehnungskoeffizienten, die im massiven Glas gemessen werden, für dünne Schichten nur von geringer Relevanz, da in dünnen Schichten Strukturen entstehen, die deutlich von der Struktur eines massiven Glases abweichen und damit auch andere Eigenschaften haben.

Gegenstand der vorliegenden Erfindung ist ein Verfahren zur Herstellung von Metallgegenständen mit niedrig sinternden, dünnen, glasartigen oder glaskeramischen pigmentierten Schutzschichten mit hoher chemischer Beständigkeit, das besonders geeignet ist für metallische Bauteile und Komponenten, die aus niedrig schmelzenden Metallen, zum Beispiel Aluminium, Magnesium oder Legierungen aus diesen oder aus Bauteilen dieser Metalle im Verbund mit hochschmelzenden Metallen wie Edelstahl bestehen.

Die Erfindung betrifft somit ein metallisches Substrat mit einer glasartigen oder glaskeramischen pigmentierten Schutzschicht, erhältlich durch Auftragen eines Alkalisilikat-haltigen Beschichtungssols auf das Substrat oder eine Oberfläche davon und thermische Verdichtung der so erhaltenen Schicht, wobei das Alkalisilikat-haltige Beschichtungssol ein oxidisches Pigment mindestens eines Elementes, ausgewählt aus der dritten und vierten Haupt- oder Nebengruppe des Periodensystems der chemischen Elemente und den Übergangsmetallen Fe, Co, Ni, Cu, Zn, Nb und Ta, enthält,
und das Alkalisilikat-haltige Beschichtungssol erhältlich ist durch ein Verfahren umfassend die Hydrolyse und Polykondensation eines oder mehrerer Silane der allgemeinen Formel (I)

RₙSiX₄₋ₙ (I)

worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen stehen und n 0, 1 oder 2 bedeutet, mit der Maßgabe, dass mindestens ein Silan mit n = 1 oder 2 verwendet wird, oder davon abgeleiteter Oligomere,
in Anwesenheit von
a) mindestens einer Verbindung aus der Gruppe der Oxide und Hydroxide der Alkali- und Erdalkalimetalle, wobei Verbindungen von Na und K verwendet werden, und
b) gegebenenfalls zugesetzten nanoskaligen SiO2-Teilchen und/oder
c) gegebenenfalls zugesetzten Alkoxiden oder löslichen Verbindungen der Elemente B, Al, Si, Ge, Sn, Y, Ce, Ti oder Zr.

Als erfindungsgemäß zu beschichtende metallische Oberfläche eignen sich alle aus einem Metall oder einer Metalllegierung bestehenden bzw. dieses oder diese umfassenden Oberflächen von Halbzeugen und Fertigprodukten. Als Beispiele für Oberflächen aus Metall können solche aus Aluminium, Aluminiumlegierungen Zinn, Kupfer, Chrom oder Nickel, einschließlich verzinkter, verchromter oder emaillierter Oberflächen, genannt werden. Beispiele für Metalllegierungen sind insbesondere Stahl bzw. Edelstahl, Aluminium-, Magnesium- und Kupferlegierungen wie Messing und Bronze. Bevorzugt werden metallische Oberflächen aus Aluminium und Aluminiumlegierungen, Stahl, Edelstahl sowie verzinktem oder verchromtem Stahl verwendet. Besonders bevorzugt sind so genannte Sandwichstrukturen, die aus Gründen einer verbesserten Wärmeleitung beziehungsweise Wärmeverteilung Kerne aus Aluminium oder Aluminiumlegierungen enthalten, die jedoch zum Zwecke einer mechanisch beanspruchbaren Oberfläche oder aus dekorativen Gründen Edelstahl-Ober- und Unterseiten haben. Dieser Dreierverbund hat sich besonders für den Kochbereich, z. B. für Grillplatten und andere Kochgeräte und -gefäße bewährt.

Vorzugsweise wird die metallische Oberfläche vor dem Auftrag der Beschichtungszusammensetzung gründlich gereinigt und insbesondere von Fett und Staub befreit. Vor der Beschichtung kann auch eine Oberflächenbehandlung, z.B. durch Corona-Entladung, durchgeführt werden.

Die metallische Oberfläche bzw. das metallische Substrat kann eine ebene oder eine strukturierte Oberfläche aufweisen. Bevorzugt weist die metallische Oberfläche eine strukturierte Oberfläche auf. Es kann sich um eine mikrostrukturierte Oberfläche oder um eine Struktur größerer Dimensionen handeln. Die Struktur kann regelmäßig sein, wie sie z.B. durch Prägen erhalten wird, oder unregelmäßig sein, wie sie z.B. durch Aufrauen erhalten wird, wobei Bürsten oder Sandstrahlen eine der gängigsten Methoden darstellt.

Gegenstand der Erfindung ist ferner ein metallisches Substrat mit einer verformbaren glasartigen Beschichtung, erhältlich durch Auftragen eines agglomeratfrei dispergierten, pigmenthaltigen Alkalisilikat-haltigen Beschichtungssols auf das Substrat und thermische Verdichtung der so erhaltenen Schicht, wobei in einer besonders bevorzugten Ausführungsform eine Überbeschichtung der entweder thermisch verdichteten oder bei Temperaturen bis 120°C getrockneten pigmentierten Schicht mit: einer nicht pigmentierten Schicht mit der gleichen Zusammensetzung wie die Matrixzusammensetzung der pigmentierten Grundschicht erfolgt, und anschließende Wärmebehandlung der Schicht/Schichten. Je nach Pigmenttyp wird in einem mehrstufigen Wärmebehandlungsverfahren verdichtet, wobei die Wärmebehandlung in der ersten Stufe entweder (A) in einer sauerstoffhaltigen Atmosphäre oder (B) im Vakuum bei einem Restdruck von beispielsweise ≤ 15 mbar durchgeführt wird und in der zweiten Stufe in einer sauerstoffarmen Atmosphäre bis zur vollständigen Verdichtung unter Ausbildung einer glasartigen Schicht durchgeführt wird. Zur Beschleunigung des Verdichtungsprozesses kann auch gegebenenfalls zusätzlich Wasserdampf in unterschiedlichen Konzentrationen der Ofenatmosphäre zugegeben werden.

Der Beschichtungsprozess umfasst dabei die folgenden Schritte:
a) Herstellung einer Komposit-Beschichtungslösung durch die Hydrolyse und Kondensation eines oder mehrerer Organoalkoxysilane, eines Orthokieselsäureesters, in Gegenwart eines löslichen Oxid, Hydroxids oder löslichen und thermisch leicht zersetzbaren Verbindung der genannten Alkalimetalle, Natrium, Kalium, und gegebenenfalls in Gegenwart von kolloidalem Kieselsol und eines Alkoxids eines Elements aus der dritten oder vierten Haupt- oder Nebengruppe des Periodensystem der chemischen Elemente, wie z.B. der Elemente B, Al, Ge, Sn, Ti, Zr, sowie weiterer Elemente wie P oder Nb.
b) Dispergierung von plättchenförmigen oder anderen Pigmenten, die Oxide von Elementen aus der dritten und vierten Haupt- oder Nebengruppe insbesondere die Oxide der Elemente B, AI, Si, Ge, Sn, Y, Ce, Ti oder Zr oder der Übergangsmetalle Fe, Co, Ni, Cu, Zn, Nb oder Ta umfassen. Diese Pigmente werden gegebenenfalls zuvor zur Verbesserung der Dispergierbarkeit mit einer entsprechenden Oberflächenmodifizierung versehen, weil die Agglomeratfreiheit der Dispersion die Erzielung einer hohen chemischen Beständigkeit erleichtert. Dabei können auch
   Mischungen oder Verbindungen dieser Oxide (z.B. Spinelle wie FeAl-Spinell) oder mit Interferenzschichten überzogene Oxidpartikel, bevorzugt bestehend aus SiO₂ oder Al₂O₃, oder oxidische plättchenförmige Partikel, die auch andere oxidische Zusammensetzungen umfassen können, wie z.B. Glimmerplättchen, eingesetzt werden. Solche Pigmente, die auch im Handel unter dem Namen Effekt- oder Interferenzpigmente erhältlich sind, sind zum Beispiel mit oxidischen interferierenden Schichten aus TiO₂, Al₂O₃, ZrO₂ oder Fe₂O₃ überzogen und ermöglichen durch ihre Interferenzwirkung ein breites Spektrum von verschiedenen Farben und in dispergierter Form den sogenannten Metallic-Effekt. Selbstverständlich sind diese Oxide lediglich beispielhaft anzusehen und es können natürlich auch andere Pigmente verwendet werden. Dabei ist es unerheblich, in welchen Partikelgrößen diese Pigmente eingesetzt werden, In der Patentschrift WO 2008/099008 ist ein Verfahren beschrieben, in welchem durch eine Nassvermahlung solcher Pigmente mit einer Ausgangsgröße von circa 25 µm Pigmente in der Größenordnung von 5 µm erhalten werden, die zu besonders glatten Schichten führen, Für die Herstellung von spülmaschinenfesten beziehungsweise alkaliresistenten farbigen Schichten gemäß der vorliegenden Erfindung spielen jedoch Form und Größe der Partikel keine entscheidende Rolle, solange sie den Mikrometerbereich nicht überschreiten,
c) Auftragen der Beschichtungssuspension auf das Metallsubstrat, bevorzugt mit einer Nassfilmdicke von 5 bis 20 µm, besonders bevorzugt 8 bis 11 µm, vorzugsweise über einen Sprühprozess.
d) Abtrocknen des nassen Films bis zur Staubtrockene.
e) Einbrennen der Beschichtung bei Temperaturen von 350 bis 600°C, vorzugsweise 450 bis 500°C, unter einer geeigneten Atmosphäre, z.B. in reduzierender Atmosphäre bei Verwendung von Ruß als Pigment, oder in einer oxidierenden Atmosphäre bei Verwendung von farbgebenden Eisen(III)Verbindungen, deren Farbe von der Aufrechterhaltung von Eisen(III) während des Einbrennprozesses abhängt.
f) Überbeschichtung des abgekühlten Substrats mit einer Zusammensetzung gemäß a), wobei jedoch als Alkalikomponente eine Kombination von zwei Komponenten aus der Gruppe Na/K, Na/Cs oder Na/Li verwendet wird. Besonders bevorzugt ist hierbei die Kombination Na/K.
g) Einbrennen der Überbeschichtung bei Temperaturen von 350 bis 600°C, wobei der Bereich von 450 bis 500°C bevorzugt ist. Bevorzugte Schichtdicken sind dabei 3 bis 8 µm, besonders bevorzugt 4 bis 6 µm.
h) Alternativ zu e) kann auch die Überbeschichtung nach f) nach dem Abtrocknen der Beschichtung nach c) erfolgen Der Einbrennprozess erfolgt gemäß e) oder g).

Während das Beschichtungssystem gemäß a) ohne die beschriebenen Pigmente als Additive keine ausreichende Alkalibeständigkeit zum Gebrauch in der Spülmaschine aufweist, zeigen die gleichen Schichtzusammensetzungen in pigmentierter Form oder als Überbeschichtung eine hohe Spülmaschinenfestigkeit Ohne sich an eine bestimmte Theorie binden zu wollen, könnte dies damit erklärt werden, dass die Alkalibeständigkeit von glasartigen silikatischen Systemen durch den Einbau bestimmter netzwerkstabilisierender Ionen in die Glasstruktur signifikant verbessert werden kann. Dazu gehören Ionen der oben aufgeführten Elemente der dritten und vierten Haupt- und Nebengruppe sowie die Übergangsmetalle der Eisengruppe Der netzwerkstabilisierende Effekt kann mit der Diffusion solcher Ionen aus der Pigment-/Additivoberfläche in die Mikro- beziehungsweise Nanoporenstruktur des Beschichtungswerkstoffes nach a) erklärt werden, bevor sich die Struktur thermisch verdichtet hat.

Zur Ausbildung des Effektes ist eine weitestgehend agglomeratfreie Dispergierung der Pigmente erforderlich, da nur über eine solche Homogenisierung eine ausreichende Kontaktfläche zwischen dem Matrixsystem nach a) und den stabilisierenden Pigmenten möglich ist. Zur Dispergierung ist daher in Abhängigkeit von den physikalisch-chemischen Oberflächeneigenschaften der Pigmente eine Oberflächenmodifizierung erforderlich, um die Wechselwirkung zwischen den einzelnen Pigmentpartikeln klein zu halten. Aus diesem Grund wird auch vorzugsweise die Schichtdicke der zweiten Schicht möglichst niedrig gehalten, um möglichst kurze Diffusionswege zu erzielen.

Eine wichtige Aufgabe dieser Erfindung war es, ein Beschichtungssystem zu entwickeln, mit dem Gebrauchsgegenstände, Bauteile, Reaktoren, Komponenten für Fahrzeuge, Küchengeräte, Kochgeschirr, Besteck, Accessoires, Elektrogeräte und viele andere Substrate beschichtet werden können, bei denen neben einem hohen Maß an dekorativer Wirkung auch eine ausreichende chemische Beständigkeit erforderlich ist und bei denen durch die alleinige Verwendung von Metallen mit niedrigen Schmelzpunkt oder bei Verwendung dieser Metalle in Kombination mit höher schmelzenden Metallen (wie Kupfer, Stahl, Edelstahl, Messing) die Verwendung von handelsüblichen Emails nicht möglich war. Ein Spezialfall für die Anforderung von chemischer Beständigkeit ist die oben beschriebene Spülmaschinenfestigkeit. Beispiele für weitere Anforderungen sind die Beständigkeit gegen Handschweiß, gegen Säuren und Laugen, gegen die verschiedenen Komponenten in Lebensmitteln (organische Säuren, Komplexbildender, Eiweiße, Tenside etc.) oder gegen Salzbelastung (zum Beispiel im Automobilsektor).

Eine derartige Beschichtungszusammensetzung ist z.B. erhältlich durch Hydrolyse und Polykondensation eines oder mehrerer Silane der allgemeinen Formel

RₙSiX₄₋ₙ (I)

worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinyigruppen mit bis zu 4 Kohlenstoffatomen und Aryl-, Aralkyl- und Alkarylgruppen mit 6 bis 10 Kohlenstoffatomen stehen und n 0, 1 oder 2 bedeutet, mit der Maßgabe das mindestens ein Silan mit n 1 oder 2 verwendet wird, oder davon abgeleiteter Oligomere,
in Anwesenheit von
a) mindestens einer Verbindung aus der Gruppe der Oxide und Hydroxide der Alkali-und Erdalkalimetalle und gegebenenfalls
b) gegebenenfalls zugesetzten nanoskaligen SiO₂-Teilchen,
c) gegebenenfalls von Alkoxiden oder löslichen Verbindungen der Metalle B, Al, Si, Ge, Sn, Y, Ce, Ti oder Zr,
d) farbgebenden oder weiß färbenden, agglomeratfrei dispergierten Pigmenten für die farbgebende Grundschicht.

Damit können glasartige farbige oder weiße Schichten auf metallischen Oberflächen erhalten werden, deren Dicke z.B. bis zu 10 µm betragen kann, ohne dass bei der Trocknung und beim Verdichten Rissbildung auftritt. Die aufgetragenen Beschichtungszusammensetzungen können zum Beispiel auf Edelstahl- oder Stahloberflächen schon bei relativ niedrigen Temperaturen (in der Regel ab 400°C) in dichte silikatische glasartige Filme umgewandelt werden Die erfindungsgemäß hergestellten Schichten haben in der Regel eine Dicke von 2 bis 8 µm, vorzugsweise 2,5 bis 7 µm und insbesondere 3 bis 6 µm. Sie bilden eine hermetisch abschließende Schicht, die auch bei höheren Temperaturen den Sauerstoffzutritt an die metallische Oberfläche verhindert. In einer besonders bevorzugten Ausführungsform wird auf die farbgebende Grundschicht eine zweite pigmentfreie Beschichtung gleicher Zusammensetzung aufgetragen, wobei das Auftragen wahlweise nach Trocknen der farbgebenden Grundschicht bei Temperaturen bis zu 120°C, vorzugsweise 100°C und in einer besonders bevorzugten Ausführungsform bei 80°C erfolgt. Die erfindungsgemäß hergestellten Deckschichten haben in der Regel eine Schichtdicke von 1 bis 7 µm, vorzugsweise 2 bis 6 µm und insbesondere 3 bis 5 µm. Sie sind alkaliresistent, witterungsbeständig, handschweißbeständig und spülmaschinenfest.

Die Erfindung eignet sich insbesondere für die Herstellung glasartiger Oberflächenschichten metallischen Bauteilen für Bauwerke und Teilen davon, wie zum Beispiel Fassadenplatten aus Stahl, Edelstahl, Aluminium und Aluminiumlegierungen; Fortbewegungs- und Transportmittel und Teilen davon; Gerätschaften, Vorrichtungen und Maschinen für gewerbliche bzw. industrielle Zwecke und Forschung sowie Teilen davon; Haushaltsgegenständen und Arbeitsgerätschaften für den Haushalt sowie Teilen davon; Elektro- und Kochgeräte, Kochgeschirr, Behältnisse, Bestecke und Teilen davon, Geräte und Hilfsmitteln für Spiel, Sport und Freizeit und Teilen davon sowie Geräte, Hilfsmittel und Vorrichtungen für medizinische Zwecke und Kranke.

Darüber hinaus eignen sich die Beschichtungen in analoger Weise zum Auftrag auf keramische oder Glasoberflächen.

Konkrete Beispiele für derartige beschichtungsfähige Materialien bzw. Gegenstände als Substrat werden im Folgenden angegeben. Bevorzugt handelt es sich bei den beschichteten Oberflächen um Oberflächen aus Stahl oder Edelstahl.

### Bauwerke (insbesondere Gebäude) und Teile davon:

Innen und Außenfassaden von Gebäuden, Fußböden und Treppen, Fahrtreppen, Aufzüge, z.B. deren Wände, Treppengeländer, Möbel, Verkleidungen, Beschläge, Türen, Griffe (insbesondere mit Anti-Fingerprint-Ausrüstungen, z.B. Türgriffe), Fassadenbleche, Bodenbeläge, Fenster (insbesondere Fensterrahmen, Fensterbänke und Fenstergriffe), Jalousien, Armaturen in Küche, Bad und WC, Duschkabinen, Sanitärzeilen, WC-Kabinen, allgemein Gegenstände im Sanitärbereich (z.B. Toiletten, Waschbecken, Armaturen, Accessoires), Rohre (und insbesondere Abflussrohre), Heizkörper, Lichtschalter, Lampen, Beleuchtung, Briefkästen, Geldautomaten, Infoterminals, seewasserfeste Beschichtungen für die Ausrüstung von Hafenanlagen, Dachrinnen, Regenrinnen, Antennen, Sateilitenschüsseln, Handläufe von Geländern und Rolltreppen, Öfen, Windkraftanlagen, insbesondere Rotorblätter, Denkmäler, Skulpturen und allgemein Kunstwerke mit metallischen Oberflächen, insbesondere solche, die im Freien aufgestellt sind.

### Haushaltsgegenstände und Gerätschaften für den Haushalt sowie Teile davon:

Mülleimer, Geschirr und Kochgeschirr (z.B. aus Edelstahl, Aluminium, Aluminiumlegierungen und Sandwich-Metalle, insbesondere dreilagig mit einem Kern aus Aluminium oder Aluminiumlegierungen und außen mit anderen Metallen, wie z.B. Edelstahl), Bestecke (z.B. Messer), Tabletts, Pfannen, Töpfe, Backformen, Kochutensilien (z.B. Raspeln, Knoblauchpressen sowie Halterungen), Aufhängevorrichtungen, Kühlschränke, Kochfeldrahmen, Kochmulden, Heizplatten, Warmhalteflächen, Backöfen (innen und außen), Eierkocher, Mikrowellengeräte, Wasserkocher, Grillroste, Dampfgaren, Öfen, Arbeitsflächen, Armaturen im Küchenbereich, Dunstabzugshauben, Blumenvasen, Gehäuse von TV-Geräten und Stereo-Anlagen, Gehäuse von (elektrischen) Haushaltsgeräten, Blumenvasen, Christbaumkugeln, Möbel, Möbelfronten aus Edelstahl, Spülen, Lampen und Leuchten

### Fortbewegungs- und Transportmittel (z.B. Pkw, Lkw, Omnibus, Motorrad, Moped, Fahrrad, Eisenbahn, Straßenbahn, Schiff und Flugzeug) und Teile davon:

Schutzbleche von Fahrrädern und Motorrädern, Instrumente von Motorrädern, Türgriffe, Lenkräder, Reifenfelgen, Auspuffanlagen bzw. - röhre, temperaturbelastete Teile (Motorteile, Verkleidungen, Ventile und Ventildeckel), Beschläge, Latentwärmetauscher, Kühler, Teile der Innenausstattung mit metallischer Oberfläche (z.B. als Kratzfestbeschichtung), Tankstutzen, Gepäckträger, Dachcontainer für Pkws, Anzeigeinstrumente, Tankwagen, z.B. für Milch, Öl oder Säure, und allgemein sämtliche Karosserieteile sowie seewasserfeste Beschichtung für die Ausrüstung von Schiffen und Booten,

### Arbeitsgerätschaften, Vorrichtungen und Maschinen (z.B. aus dem Anlagenbau (chemische Industrie, Lebensmittelindustrie, Kraftwerksanlagen) und der Energietechnik) für gewerbliche bzw. industrielle Zwecke und Forschung sowie Teile davon:

Wärmetauscher, Verdichterräder, Spaltwendeltauscher, Cu-Elemente zur industriellen Heizung, Formen (z.B. Gießformen, insbesondere aus Metall), Schütttrichter, Einfüllanlagen, Extruder, Wasserräder, Walzen, Transportbänder, Druckmaschinen, Siebdruckschablonen, Abfüllmaschinen, (Maschinen-)Gehäuse, Bohrköpfe, Turbinen, Rohre (innen und außen, insbesondere für Flüssigkeits- und Gastransport), Rührer, Rührkessel, Ultraschallbäder, Reinigungsbäder, Behälter, Transporteinrichtungen in Öfen, Innenauskleidung von Öfen zum Hochtemperatur-, Oxidations-, Korrosions- und Säureschutz, Gasflaschen, Pumpen, Reaktoren, Bioreaktoren, Kessel (z.B. Brennstoffkessel), Wärmetauscher (z.B. in der Lebensmittelprozesstechnik oder für (Biomasse-)festbrennstoffkessel), Abluftanlagen, Sägeblätter, Abdeckungen (z.B. für Waagen), Tastaturen, Schalter, Knöpfe, Kugellager, Wellen, Schrauben, Solarzellen, Solaranlagen, Werkzeuge, Werkzeuggriffe, Flüssigkeitsbehälter, Isolatoren, Kapillaren, Laboreinrichtungen (z.B. Chromatographiesäulen und Abzüge) und Teile von Elektroakkumulatoren und Batterien.

### Hilfsmittel für Spiel, Sport und Freizeit:

Gartenmöbel, Gartengeräte, Werkzeuge, Spielplatzgeräte (z.B. Rutschen), Snowboards, Roller, Golfschläger, Hanteln, Gewichte, Trainingsgeräte, Beschläge, Sitzgelegenheiten in Parks, Spielplätzen, Einrichtungsgegenstände und Geräte in Schwimmbädern usw.

### Geräte, Hilfsmittel und Vorrichtungen für medizinische Zwecke und Kranke:

Chirurgische Instrumente, Kanülen, medizinische Behälter, zahnmedizinische Geräte, Brillengestelle, medizinische Bestecke (für Operationen und Zahnbehandlungen), allgemein Gegenstände aus dem Bereich der Medizintechnik (z.B. Rohre, Apparate, Behälter) und Rollstühle, sowie ganz allgemein Krankenhauseinrichtungen.

Neben den obigen Gegenständen können natürlich auch andere Gegenstände und Teile davon vorteilhaft mit den obigen Oberflächenschichten versehen werden, wie z.B. Spielzeuge, Schmuck, Münzen.

Im Folgenden werden die Beschichtungszusammensetzung und deren Komponenten beschrieben.

Unter den obigen Silanen der allgemeinen Formel (I) befindet sich mindestens ein Silan, in dessen allgemeiner Formel n den Wert 1 oder 2 aufweist. In der Regel werden mindestens zwei Silane der allgemeinen Formel (I) in Kombination eingesetzt, In diesem Fall werden diese Silane bevorzugt in einem solchen Verhältnis eingesetzt, dass der Durchschnittswert von n (auf molarer Basis) 0,2 bis 1,5, vorzugsweise 0,5 bis 1,0, beträgt. Besonders bevorzugt ist ein Durchschnittswert von n im Bereich von 0,6 bis 0,8.

In der allgemeinen Formel (I) sind die Gruppen X, die gleich oder verschieden voneinander sind, hydrolysierbare Gruppen oder Hydroxylgruppen. Konkrete Beispiele für hydrolysierbare Gruppen X sind Halogenatome (insbesondere Chlor und Brom), Alkoxygruppen und Acyloxygruppen mit bis zu 6 Kohlenstoffatomen. Besonders bevorzugt werden Alkoxygruppen, insbesondere C₁₋₄-Alkoxygruppen wie Methoxy, Ethoxy, n-Propoxy und i-Propoxy. Vorzugsweise sind die Gruppen X in einem Silan identisch, wobei besonders bevorzugt Methoxy- oder Ethoxygruppen eingesetzt werden,

Bei den Gruppen R in der allgemeinen Formel (I), die im Falle von n = 2 gleich oder verschieden sein können, handelt es sich um Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen. Konkrete Beispiele für derartige Gruppen sind Methyl, Ethyl, n-Propyl, i-Propyl, n-Butyl, sek.-Butyl und tert.-Butyl, Vinyl, Allyl und Propargyl, Phenyl, Tolyl und Benzyl. Die Gruppen können übliche Substituenten aufweisen, vorzugsweise tragen derartige Gruppen aber keinen Substituenten. Bevorzugte Gruppen R sind Alkylgruppen mit 1 bis 4 Kohlenstoffatomen, insbesondere Methyl und Ethyl, sowie Phenyl.

Erfindungsgemäß bevorzugt ist es, wenn mindestens zwei Silane der allgemeinen Formel (I) eingesetzt werden, wobei in einem Fall n = 0 und im anderen Fall n = 1 ist. Derartige Silan-Mischungen umfassen zum Beispiel mindestens ein Alkyltrialkoxysilan (z.B. (M)ethyltri(m)ethoxysilan) und ein Tetraalkoxysilan (z.B. Tetra(m)ethoxysilan), die vorzugsweise in einem solchen Verhältnis eingesetzt werden, dass der Durchschnittswert von n in den oben angegebenen bevorzugten Bereichen liegt. Eine besonders bevorzugte Kombination für die Ausgangssilane der Formel (I) ist Methyltri(m)ethoxysilan und Tetra(m)ethoxysilan, die vorzugsweise in einem solchen Verhältnis eingesetzt werden, dass der Durchschnittswert von n in den oben angegebenen bevorzugten Bereichen liegt.

Die Hydrolyse und Polykondensation des oder der Silane der allgemeinen Formel (I) wird in Anwesenheit mindestens einer Verbindung aus der Gruppe der Alkoxide, Oxide, Hydroxide oder löslichen, thermisch bei Temperaturen bis zu 400°C zersetzbaren Verbindungen der Alkali- und Erdalkalimetalle durchgeführt, wobei Verbindungen von Na und K verwendet werden. Bei Verwendung einer Alkalimetallverbindung ohne gegebenenfalls eingesetzte Erdalkalioxide oder netzwerkstabilisierende Oxide wie B, Al, Si, Ge, Sn, Y, Ce, Ti oder Zr oder der Übergangsmetalle Fe, Co, Ni, Cu, Zn, Nb oder Ta oder von Ca wird dieses vorzugsweise in einer solchen Menge eingesetzt, dass das Atomverhältnis Si : Alkalimetall im Bereich von 20:1 bis 7:1, insbesondere von 15:1 bis 10:1, liegt. In jedem Fall wird das Atomverhältnis von Silicium zu (Erdalkalimetall so hoch gewählt, dass der resultierende Überzug nicht wasserlöslich ist. Werden hingegen Erdalkalioxide oder die oben genannten netzwerkstabilisierende Elemente zusätzlich eingesetzt, kann das molare Verhältnis von Alkalimetall:Silicium bis zum Wert von 2:1 erhöht werden (entsprechend Alkaligehalten von bis zu 12 Gewichtsprozent).

Die gegebenenfalls zusätzlich zu den hydrolysierbaren Silanen der allgemeinen Formel (I) verwendeten nanoskaligen Si0₂-Teilchen werden vorzugsweise in einer solchen Menge eingesetzt, dass das Verhältnis aller Si-Atome in den Silanen der allgemeinen Formel (I) zu allen Si-Atomen in den nanoskaligen Si0₂-Teilchen im Bereich von 5:1 bis 1:2, insbesondere 3:1 bis 1:1, liegt.

Unter nanoskaligen Si0₂-Teilchen werden Si0₂-Teilchen mit einer durchschnittlichen Teilchengröße (bzw. einem durchschnittlichen Teilchendurchmesser) von vorzugsweise nicht mehr als 100 nm, bevorzugter nicht mehr als 50 nm und insbesondere nicht mehr als 30 nm verstanden. Hierfür können z.B. auch handelsübliche Kieselsäureprodukte, z.B. Kieselsole, wie die Levasile®, Kieselsole der Bayer AG, oder pyrogene Kieselsäuren, z.B. die Aerosil-Produkte von Degussa, Ludox® von Dupont verwendet werden. Ebenso können Kieselsole in alkoholischen Lösemitteln, wie sie zum Beispiel von Nishin Chemicals angeboten werden, verwendet werden. Die teilchenförmigen Materialien können in Form von Pulvern und Solen zugesetzt werden. Sie können aber auch in situ bei der Hydrolyse und Polykondensation der Silane gebildet werden.

Die Hydrolyse und Polykondensation der Silane können in Abwesenheit oder Anwesenheit eines organischen Lösungsmittels durchgeführt werden Vorzugsweise ist kein organisches Lösungsmittel vorhanden. Bei Einsatz eines organischen Lösungsmittels sind die Ausgangskomponenten vorzugsweise im Reaktionsmedium (das in der Regel Wasser einschließt) löslich. Als organische Lösungsmittel eignen sich insbesondere mit Wasser mischbare Lösungsmittel wie beispielsweise ein- oder mehrwertige aliphatische Alkohole (wie beispielsweise Methanol, Ethanol), Ether (wie beispielsweise Diether), Ester (wie beispielsweise Ethylacetat), Ketone, Amide, Sulfoxide und Sulfone. Im übrigen können die Hydrolyse und Polykondensation gemäß den dem Fachmann geläufigen Modalitäten durchgeführt werden.

Die gegebenenfalls zugesetzten, thermisch zu oxidischen Komponenten reagierenden Verbindungen B, Al, Si, Ge, Sn, Y, ce, Ti oder Zr oder der Übergangsmetalle Fe, Co, Ni, Cu, Zn, Nb oder Ta oder Ca können in Form von löslichen Alkoxiden oder löslichen, sich bei Temperaturen bis zu 400°C zersetzenden Verbindungen, wie zum Beispiel Salzen organischer Säuren eingesetzt werden. Beispiele dafür sind Acetate, Formiate, Propionate oder Oxalate, aber auch alle anderen organischen Säuren, die im Reaktionsmedium löslich sind. Darüber hinaus kommen die Literaturbekannten Beispiele von leicht zersetzlichen Nitraten in Frage.

Als oxidische Pigmente kommen farbgebende handelsübliche Pigmente in Frage, wie zum Beispiel Spinelle, insbesondere Aluminiumspinelle, Oxide von Übergangsmetallen wie Eisen, Kobalt oder Nickel, aber auch Mischungen von denselben. Zusätzlich können auch noch Ruße zur Farbvertiefung eingesetzt werden.

Als Effektpigmente kommen sogenannte Interferenz-Pigmente mit oxidischer Zusammensetzung in Frage, Hierzu zählen alle handelsüblichen Effektpigmente, wie zum Beispiel die Iriodin-Pigmente der Firma Merck,

Zur Herstellung einer agglomeratfreien Dispersion werden gegebenenfalls handelsübliche Oberflächenmodifikatoren, wie zum Beispiel funktionelle Silane oder chelatbildende Komplexbildner mit geeigneten funktionellen Gruppen eingesetzt. Beispiele für Silane sind die Epoxysilane zur Erzeugung hydrophiler Oberflächen, oder Alkylalkoxysilane zur Erzeugung hydrophober Oberflächen. Beispiele für chelatbildende Komplexbildner sind zum Beispiel β-Diketone.

Die Herstellung der pigmentierten Beschichtungslösung erfolgt durch Hydrolyse der Ausgangsverbindungen für die oxidischen Komponenten in Gegenwart von Alkaliverbindungen und der agglomeratfrei dispergierten Pigmente.

Die erfindungsgemäß eingesetzte Beschichtungszusammensetzung kann in der Lackierungsindustrie übliche Additive enthalten, z.B. die Rheologie und das Trocknungsverhalten kontrollierende Additive, Benetzungs- und Verlaufshilfsmittel, Entschäumer, Lösungsmittel, Farbstoffe und Pigmente. Als Lösungsmittel eignen sich z.B. Alkohole und/oder Glycole, beispielsweise ein Gemisch aus Ethanol, Isopropanol und Butylglycol. Ferner können handelsübliche Mattierungsmittel, z.B. mikroskalige Si0₂- oder keramische Pulver zugesetzt werden, um mattierte Schichten mit Anti-Fingerprint-Eigenschaften zu erreichen. Sofern eingesetzt, können die Hydrolyse und Polykondensation der Silane in Anwesenheit von Mattierungsmitteln, z.B. mikroskaligen Si0₂- oder keramischen Pulvern erfolgen. Diese können aber auch später zur Beschichtungszusammensetzung zugegeben werden.

Die erfindungsgemäß eingesetzte pigmentierte Beschichtungszusammensetzung kann nach üblichen Beschichtungsmethoden auf die metallische Oberfläche aufgebracht werden, Anwendbare Techniken sind zum Beispiel das Tauchen, Gießen, Fluten, Schleudern, Sprühen, Aufstreichen oder der Siebdruck. Besonders bevorzugt werden automatisierte Beschichtungsverfahren wie Flachspritzen, Einsatz von Sprührobotern und automatisches Sprühen mit maschinell geführten rotierenden oder schwenkenden Substraten. Dabei können zum Verdünnen übliche Lösungsmittel, wie sie in der Lackierungsindustrie gebräuchlich sind, verwendet werden.

Die auf die metallische Oberfläche aufgetragene Beschichtungszusammensetzung wird normalerweise bei Raumtemperatur bzw. leicht erhöhter Temperatur (beispielsweise einer Temperatur von bis zu 100°C, insbesondere bis zu 80°C, getrocknet, bevor sie thermisch zu einer glasartigen Schicht verdichtet wird. Die thermische Verdichtung kann gegebenenfalls auch durch IR- oder Laser-Strahlung erfolgen.

In einem zweiten Schritt kann in einer bevorzugten Ausführungsform der vorliegenden Erfindung auf die so hergestellte (pigmentierte) Schicht mindestens eine weitere (glasartige) Schicht aufgebracht werden, die in der Regel die gleiche Grundzusammensetzung wie die pigmentierte Schicht aufweist, nur dass die Herstellung dieser Schicht ohne Pigmente erfolgt. Eine derartige glasartige Schicht kann auf der erfindungsgemäß hergestellten glasartigen pigmentierten Schicht dadurch vorgesehen werden, dass man den erfindungsgemäß auf der metallischen Oberfläche vorgesehenen Überzug vor seiner thermischen Verdichtung (und vorzugsweise nach seiner Trocknung bei Raumtemperatur oder erhöhter Temperatur) mit der Beschichtungszusammensetzung für die glasartige Schicht versieht und die beiden Überzüge dann gemeinsam thermisch verdichtet.

Die metallischen Oberflächen erhalten erfindungsgemäß eine witterungsbeständige, korrosionsinhibierende, kratzfeste, alkaliresistente und spulmaschinenfeste Beschichtung, die insbesondere auch Verschmutzungen, z.B. durch Fingerabdrücke, Wasser, Öl, Fett, Tenside und Staub, vermeiden hilft.

Die folgenden Beispiele erläutern die Erfindung ohne sie zu beschränken.

### Beispiel 1

### Herstellung des Matrixsystems NaKSi-B

750 ml Methyltriethoxysilan, 210 ml Tetraethoxysilan, 12 g NaOH und 16.8 g KOH werden in ein verschließbares Glasgefäß mit einem Rührer gegeben und intensiv gerührt. Nach zwei bis drei Stunden haben sich NaOH und KOH vollständig gelöst. Es wird weiter gerührt, bis eine Gesamtzeit von 15 Stunden erreicht wird. Dann werden unter heftigem Rühren 96 ml über einen Zeitraum von zwei Stunden destilliertes Wasser hinzugetropft. Während dieser Zeit wird die Temperatur auf 40°C erhöht. Anschließend lässt man die Reaktionsmischung unter weiterem Rühren über einen Zeitraum von einer Stunde auf Raumtemperatur abkühlen.

Das Matrixsystem NaKSi-B kann in der Kühltruhe bei -15°C über mehrere Monate aufbewahrt werden.

### Beispiel 2

### Herstellung einer Beschichtungslösung mit roten Interferenz-Pigmenten

5 g des roten Interferenz-Pigmentes Lava Red® der Firma Merck AG werden in Gegenwart von 10 g Butylglycol als Kompatibilisator/- Oberflächenmodifikator und Verlaufsmittel in 100 g des Matrixsystems NaKSi-B unter kräftigem Rühren dispergiert, Dabei wird eine agglomeratfreie Dispersion mit einer Viskosität von circa 15 mPa.s erreicht, die für Verwendung in einer automatischen Sprühbeschichtungstechnologien geeignet ist.

### Beispiel 3

### Herstellung einer Beschichtungslösung mit roten Interferenz-Pigmenten

5 g des roten Interferenz-Pigmentes Lava Red® der Firma Merck AG werden in Gegenwart von 10 g Butylglycol, in dem zusätzlich zu Butylglycol 2 g γ-Aminopropyltriethoxisilan als Kompatibilisator/- Oberflächenmodifikator und Verlaufsmittel enthalten sind, in 100 g des Matrixsystems NaKSi-B unter heftigem Rühren dispergiert. Dabei wird eine agglomeratfreie Dispersion mit einer Viskosität von circa 15 mPa.s erreicht, die für Verwendung in einer automatischen Sprühbeschichtungstechnologien geeignet ist.

### Beispiel 4

### Herstellung einer weiß färbenden Beschichtungslösung

66,66 g des Matrixsystems NaKSi-B werden mit 33,33 g Isopropanol als Kompatibilisator in einem verschließbaren Gefäß mit Rührer vermischt und 10 g TiO₂ von Tronox® CR-826, unter heftigem Rühren zugegeben und circa eine Stunde weiter gerührt. Anschließend werden unter weiterem Rühren 0,33 g plättchenförmiges Aluminiumoxid vom Typ "Alusion" dispergiert und über fünf Stunden weiter gerührt. Die Suspension wird in einem verschlossenen Gefäß aufbewahrt kann bei Kühlung auf -15°C über mehrere Wochen ohne Veränderung ihrer Eigenschaften gelagert werden.

### Beispiel 5

### Herstellung von mit rotem Interferenzpigment beschichteten Metallsubstraten

Pigmentierte Lava Red®-Beschichtungslösungen, hergestellt nach einem der Beispiele 2 oder 3 werden in das Vorratsgefäß einer Sprühpistole oder eines Sprühroboters gefüllt und nach industriellen üblichen Prüfverfahren mit Pressluft als Treibmittel auf den zu beschichtenden Gegenstand gesprüht. In Abhängigkeit von der Geometrie des Substrats wird dazu das entsprechende Computerprogramm für die Robotersteuerung aufgebaut. Die Robotersteuerung ist so aufgebaut, dass eine Nassfilmdicke 10 µm erreicht wird.

Das beschichtete Substrat wird an Luft getrocknet und anschließend wird das Matrixsystem gemäß Beispiel 1 aufgetragen, so dass eine Nassfilmdicke von circa 6 µm erreicht wird.

Das Zweischichtsystem wird unter Sauerstoffzutritt z.B. aus der Umgebungsluft über einen Zeitraum von sechs Stunden in einem industriellen Ofen bei 500°C verdichtet.

### Beispiel 6

### Herstellung von mit rotem Interferenzpigment beschichteten Metallsubstraten

Pigmentierte Lava Red®-Beschichtungslösungen, hergestellt nach einem der Beispiele 2 oder 3 werden in das Vorratsgefäß einer Sprühpistole oder eines Sprühroboters gefüllt und nach industriellen üblichen Prüfverfahren mit Pressluft als Treibmittel auf den zu beschichtenden Gegenstand gesprüht. In Abhängigkeit von der Geometrie des Substrats wird dazu das entsprechende Computerprogramm für die Robotersteuerung aufgebaut. Die Robotersteuerung ist so aufgebaut, dass eine Nassfilmdicke 10 µm erreicht wird.

Das beschichtete Substrat wird unter Sauerstoffzutritt z.B. aus der Umgebungsluft über einen Zeitraum von sechs Stunden in einem industriellen Ofen bei 500°C verdichtet. Anschließend wird das Matrixsystem gemäß Beispiel 1 aufgetragen, so dass eine Nassfilmdicke von circa 6 µm erreicht wird.

Das Zweischichtsystem wird anschließend bei 500°C über einen Zeitraum von sechs Stunden in einem industriellen Ofen gebrannt,

### Beispiel 7

### Herstellung von weiß beschichteten Sandwich-Metailsubetraten

Mit TiO₂ pigmentierte Beschichtungslösungen, hergestellt nach dem Verfahren aus Beispiel 4, werden in das Vorratsgefäß einer Sprühpistole oder eines Sprühroboters gefüllt und nach industriellen üblichen Prüfverfahren mit Pressluft als Treibmittel auf den zu beschichtenden Sandwich-Bauteil, das aus einem Kern aus Al und oben und unten aus einer Edelstahlschicht besteht, gesprüht. In Abhängigkeit von der Geometrie des Substrats wird dazu das entsprechende Computerprogramm für die Robotersteuerung aufgebaut. Die Robotersteuerung ist so aufgebaut, dass eine Nassfilmdicke 11 µm erreicht wird.

Das beschichtete Substrat wird unter Sauerstoffzutritt z.B. aus der Umgebungsluft über einen Zeitraum von 11 Stunden in einem industriellen Ofen bei 500°C verdichtet. Anschließend wird das Matrixsystem gemäß Beispiel 1 aufgetragen, so dass eine Nassfilmdicke von circa 6 µm erreicht wird.

Das Zweischichtsystem wird anschließend bei 500°C über einen Zeitraum von sechs Stunden in einem industriellen Ofen gebrannt.

## Patentansprüche

1. Metallisches Substrat mit einer glasartigen oder glaskeramischen pigmentierten Schutzschicht, erhältlich durch Auftragen eines Alkalisilikat-haltigen Beschichtungssols auf das Substrat oder eine Oberfläche davon und thermische Verdichtung der so erhaltenen Schicht, wobei das Alkalisilikat-haltige Beschichtungssol ein oxidisches Pigment mindestens eines Elementes, ausgewählt aus der dritten und vierten Haupt- oder Nebengruppe des Periodensystems der chemischen Elemente und den Übergangsmetallen Fe, Co, Ni, Cu, Zn, Nb und Ta, enthält,
und das Alkalisilikat-haltige Beschichtungssol erhältlich ist durch ein Verfahren umfassend die Hydrolyse und Polykondensation eines oder mehrerer Silane der allgemeinen Formel (I)
RₙSiX₄₋ₙ (I)
worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen stehen und n 0, 1 oder 2 bedeutet, mit der Maßgabe, dass mindestens ein Silan mit n = 1 oder 2 verwendet wird, oder davon abgeleiteter Oligomere,
in Anwesenheit von
a) mindestens einer Verbindung aus der Gruppe der Oxide und Hydroxide der Alkali- und Erdalkalimetalle, wobei Verbindungen von Na und K verwendet werden, und
b) gegebenenfalls zugesetzten nanoskaligen SiO₂-Teilchen und/oder
c) gegebenenfalls zugesetzten Alkoxiden oder löslichen Verbindungen der Elemente B, Al, Si, Ge, Sn, Y, Ce, Ti oder Zr.

2. Metallisches Substrat nach Anspruch 1, **dadurch gekennzeichnet, dass** das Element aus der dritten oder vierten Haupt- oder Nebengruppe des Periodensystems ausgewählt ist aus B, Al, Si, Ge, Sn, Y, Ce, Ti und Zr.

3. Metallisches Substrat nach einem der vorhergehenden Ansprüche, **dadurch gekennzeichnet, dass** das oxidische Pigment plättchenförmig ist.

4. Metallisches Substrat nach einem der vorhergehenden Ansprüche, **dadurch gekennzeichnet, dass** das Alkali- oder Erdalkalimetalloxid bzw. -hydroxid in einer solchen Menge eingesetzt wird, dass das Atomverhältnis Si : Alkali- oder Erdalkalimetall im Bereich von 20:1 bis 7:1, insbesondere von 15:1 bis 10:1, liegt.

5. Metallisches Substrat nach einem der vorhergehenden Ansprüche, **dadurch gekennzeichnet, dass** der Durchschnittswert von n in den Ausgangssilanen der allgemeinen Formel (I) 0,2 bis 1,5, insbesondere 0,5 bis 1,0, beträgt.

6. Metallisches Substrat nach einem der vorhergehenden Ansprüche, **dadurch gekennzeichnet, dass** das Beschichtungssol 0,5 bis 30 Gewichtsprozent, vorzugsweise 5 bis 25 Gewichtsprozent, und besonders bevorzugt 10 bis 20 Gewichtsprozent oxidisches Pigment enthält.

7. Metallisches Substrat nach einem der vorhergehenden Ansprüche, **dadurch gekennzeichnet, dass** die aufgetragene Schicht gegebenenfalls getrocknet und dann bei 350 bis 600°C, vorzugsweise 450 bis 500°C, thermisch verdichtet worden ist.

8. Metallisches Substrat nach einem der vorhergehenden Ansprüche, **dadurch gekennzeichnet, dass** vor oder nach der thermischen Verdichtung der aufgetragenen pigmentierten Schicht eine Überbeschichtung mit dem pigmentfreien Alkalisilikat-haltigen Beschichtungssol erfolgt, das entweder zusammen mit oder anschließend an die pigmentierte Schicht thermisch verdichtet wird.

9. Metallisches Substrat nach einem der vorhergehenden Ansprüche, **dadurch gekennzeichnet, dass** die Alkalikomponente des pigmentfreien Alkalisilikat-haltigen Beschichtungssols ausgewählt ist aus den Kombinationen Na/K, Na/Cs und Na/Li.

10. Verfahren zur Herstellung eines metallischen Substrats nach einem der vorhergehenden Ansprüche, **dadurch gekennzeichnet, dass** man ein Alkalisilikat-haltiges Beschichtungssol auf das Substrat oder eine Oberfläche davon aufbringt und die so erhaltene Schicht thermisch verdichtet, wobei das Alkalisilikat-haltige Beschichtungssol ein oxidisches Pigment mindestens eines Elementes, ausgewählt aus der dritten und vierten Haupt- oder Nebengruppe des Periodensystems der chemischen Elemente und den Übergangsmetallen Fe, Co, Ni, Cu, Zn, Nb und Ta, enthält und das Alkalisilikat-haltige Beschichtungssol erhältlich ist durch ein Verfahren umfassend die Hydrolyse und Polykondensation eines oder mehrerer Silane der allgemeinen Formel (I)
RₙSiX₄₋ₙ (I)
worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen stehen und n 0, 1 oder 2 bedeutet, mit der Maßgabe, dass mindestens ein Silan mit n = 1 oder 2 verwendet wird, oder davon abgeleiteter Oligomere,
in Anwesenheit von
a) mindestens einer Verbindung aus der Gruppe der Oxide und Hydroxide der Alkali- und Erdalkalimetalle, wobei Verbindungen von Na und K verwendet werden, und
b) gegebenenfalls zugesetzten nanoskaligen SiO₂-Teilchen und/oder
c) gegebenenfalls zugesetzten Alkoxiden oder löslichen Verbindungen der Elemente B, Al, Si, Ge, Sn, Y, Ce, Ti oder Zr.

11. Verfahren zur Herstellung eines metallischen Substrats nach Anspruch 10, **dadurch gekennzeichnet**, die aufgetragene Schicht gegebenenfalls getrocknet und dann bei 350 bis 600°C, vorzugsweise 450 bis 500°C, thermisch verdichtet wird.

12. Verfahren zur Herstellung eines metallischen Substrats nach einem der vorhergehenden Ansprüche, **dadurch gekennzeichnet, dass** vor oder nach der thermischen Verdichtung der aufgetragenen pigmentierten Schicht eine Überbeschichtung mit dem pigmentfreien Alkalisilikat-haltigen Beschichtungssol erfolgt, das entweder zusammen mit oder anschließend an die pigmentierte Schicht thermisch verdichtet wird.

13. Verfahren zur Herstellung eines metallischen Substrats nach einem der vorhergehenden Ansprüche, **dadurch gekennzeichnet, dass** die thermische Verdichtung in zwei Stufen durchgeführt wird, wobei die Wärmebehandlung in der ersten Stufe in einer sauerstoffhaltigen Atmosphäre und in der zweiten Stufe in einer sauerstoffarmen Atmosphäre bis zur vollständigen Verdichtung unter Ausbildung einer glasartigen Schicht erfolgt.

14. Verwendung einer glasartigen oder glaskeramischen pigmentierten Schutzschicht, erhältlich durch Auftragen eines Alkalisilikat-haltigen Beschichtungssols auf ein metallisches Substrat oder eine Oberfläche davon und thermische Verdichtung der so erhaltenen Schicht, wobei das Alkalisilikat-haltige Beschichtungssol ein oxidisches Pigment mindestens eines Elementes, ausgewählt aus der dritten und vierten Haupt- oder Nebengruppe des Periodensystems der chemischen Elemente und den Übergangsmetallen Fe, Co, Ni, Cu, Zn, Nb und Ta, enthält, als alkalibeständige oder spülmaschinenfeste Beschichtung.

## Claims

1. A metallic substrate with a vitreous or glass-ceramic pigmented protective layer, obtainable by applying an alkali metal silicate-containing coating sol to the substrate or a surface thereof and thermally densifying the layer thus obtained, said alkali metal silicate-containing coating sol comprising an oxidic pigment of at least one element selected from the third and fourth main or subgroups of the Periodic Table of the chemical elements and the transition metals Fe, Co, Ni, Cu, Zn, Nb and Ta,
and wherein the alkali metal silicate-containing coating sol is obtainable by a process comprising the hydrolysis and polycondensation of one or more silanes of the general formula (I)
RₙSiX₄₋ₙ (I)
in which the groups X are the same or different and are each hydrolyzable groups or hydroxyl groups, the residues R are the same or different and are each hydrogen, alkyl, alkenyl, and alkynyl groups having up to 4 carbon atoms, and aryl, aralkyl and alkaryl groups having 6 to 10 carbon atoms, and n is 0, 1 or 2, with the proviso that at least one silane where n = 1 or 2 is used, or oligomers derived therefrom,
in the presence of
a) at least one compound from the group of the oxides and hydroxides of the alkali metals and alkaline earth metals, wherein compounds of Na and K are used, and
b) optionally added nanoscale SiO₂ particles and/or
c) optionally added alkoxides or soluble compounds of the elements B, Al, Si, Ge, Sn, Y, Ce, Ti or Zr.

2. The metallic substrate according to claim 1, **characterized in that** the element from the third or fourth main or subgroup of the Periodic Table is selected from B, Al, Si, Ge, Sn, Y, Ce, Ti and Zr.

3. The metallic substrate according to any of the preceding claims, **characterized in that** the oxidic pigment is platelet-shaped.

4. The metallic substrate according to any of the preceding claims, **characterized in that** the alkali metal or alkaline earth metal oxide or hydroxide is used in such an amount that the atomic Si:alkali metal or alkaline earth metal ratio is in the range from 20:1 to 7:1, especially from 15:1 to 10:1.

5. The metallic substrate according to any of the preceding claims, **characterized in that** the average value of n in the starting silanes of the general formula (I) is 0.2 to 1.5, especially 0.5 to 1.0.

6. The metallic substrate according to any of the preceding claims, **characterized in that** the coating sol comprises 0.5 to 30% by weight, preferably 5 to 25% by weight and more preferably 10 to 20% by weight of oxidic pigment.

7. The metallic substrate according to any of the preceding claims, **characterized in that** the layer applied has optionally been dried and then thermally densified at 350 to 600°C, preferably 450 to 500°C.

8. The metallic substrate according to any of the preceding claims, **characterized in that** the thermal densification of the pigmented layer applied is preceded or followed by overcoating with the pigment-free alkali metal silicate-containing coating sol, which is thermally densified either together with or after the pigmented layer.

9. The metallic substrate according to any of the preceding claims, **characterized in that** the alkali metal component of the pigment-free alkali metal silicate-containing coating sol is selected from the combinations Na/K, Na/Cs and Na/Li.

10. A process for producing a metallic substrate according to any of the preceding claims, **characterized in that** an alkali metal silicate-containing coating sol is applied to the substrate or a surface thereof and the layer thus obtained is thermally densified, said alkali metal silicate-containing coating sol comprising an oxidic pigment of at least one element selected from the third and fourth main or subgroups of the Periodic Table of the chemical elements and the transition metals Fe, Co, Ni, Cu, Zn, Nb and Ta, and wherein the alkali metal silicate-containing coating sol is obtainable by a process comprising the hydrolysis and polycondensation of one or more silanes of the general formula (I)
RₙSiX₄₋ₙ (I)
in which the groups X are the same or different and are each hydrolyzable groups or hydroxyl groups, the residues R are the same or different and are each hydrogen, alkyl, alkenyl, and alkynyl groups having up to 4 carbon atoms, and aryl, aralkyl and alkaryl groups having 6 to 10 carbon atoms, and n is 0, 1 or 2, with the proviso that at least one silane where n = 1 or 2 is used, or oligomers derived therefrom,
in the presence of
a) at least one compound from the group of the oxides and hydroxides of the alkali metals and alkaline earth metals, wherein compounds of Na and K are used, and
b) optionally added nanoscale SiO₂ particles and/or
c) optionally added alkoxides or soluble compounds of the elements B, Al, Si, Ge, Sn, Y, Ce, Ti or Zr.

11. The process for producing a metallic substrate according to claim 10, **characterized in that** the layer applied is optionally dried and then thermally densified at 350 to 600°C, preferably 450 to 500°C.

12. The process for producing a metallic substrate according to any of the preceding claims, **characterized in that** the thermal densification of the pigmented layer applied is preceded or followed by overcoating with the pigment-free alkali metal silicate-containing coating sol, which is thermally densified either together with or after the pigmented layer.

13. The process for producing a metallic substrate according to any of the preceding claims, **characterized in that** the thermal densification is performed in two stages, the heat treatment being effected in an oxygenous atmosphere in the first stage and in a low-oxygen atmosphere in the second stage until complete densification to form a vitreous layer.

14. Use of a vitreous or glass-ceramic pigmented protective layer, obtainable by applying an alkali metal silicate-containing coating sol to a metallic substrate or a surface thereof and thermally densifying the layer thus obtained, said alkali metal silicate-containing coating sol comprising an oxidic pigment of at least one element selected from the third and fourth main or subgroups of the Periodic Table of the chemical elements and the transition metals Fe, Co, Ni, Cu, Zn, Nb and Ta, as an alkali resistant or dishwasher-proof coating.

## Revendications

1. Substrat métallique à couche protectrice vitreuse ou vitrocéramique pigmentée, pouvant être obtenue par application d'un sol de revêtement contenant un silicate alcalin sur le substrat ou une surface de celui-ci et condensation thermique de la couche ainsi obtenue, dans lequel le sol de revêtement contenant un silicate alcalin comprend un pigment oxydique d'au moins un élément, choisi dans le troisième et quatrième groupe principal ou secondaire du système périodique des éléments chimiques et parmi les métaux de transition Fe, Co, Ni, Cu, Zn, Nb et Ta,
et le sol de revêtement contenant un silicate alcalin peut être obtenu par un procédé comprenant l'hydrolyse et la polycondensation d'un ou de plusieurs silanes de formule générale (I)
RₙSiX₄₋ₙ (I)
dans laquelle les groupes X, identiques ou différents, sont des groupes hydrolysables ou des groupes hydroxyle, les résidus R, identiques ou différents, représentent l'hydrogène, les groupes alkyle, alcényle et alcinyle ayant jusqu'à 4 atomes de carbone et les groupes aryle, aralkyle et alkaryle ayant 6 à 10 atomes de carbone, et n représente 0, 1 ou 2, à condition qu'au moins un silane ayant n = 1 ou 2 soit utilisé, ou des oligomères qui en sont dérivés,
en présence de
a) au moins un composé du groupe des oxydes et des hydroxydes de métaux alcalins et alcalino-terreux, où les composés de Na et K sont utilisés, et
b) nanoparticules de SiO₂ le cas échéant ajoutées et/ou
c) alcoxydes le cas échéant ajoutés ou composés solubles des éléments B, Al, Si, Ge, Sn, Y, Ce, Ti ou Zr.

2. Substrat métallique selon la revendication 1, **caractérisé en ce que** l'élément du troisième ou quatrième groupe principal ou secondaire du système périodique est choisi parmi B, Al, Si, Ge, Sn, Y, Ce, Ti et Zr.

3. Substrat métallique selon l'une des revendications précédentes, **caractérisé en ce que** le pigment oxydique est lamellaire.

4. Substrat métallique selon l'une des revendications précédentes, **caractérisé en ce que** l'oxyde et/ou l'hydroxyde de métal alcalin ou alcalino-terreux est ajouté en une quantité telle que le rapport atomique Si : métal alcalin ou alcalino-terreux se situe dans la plage de 20:1 à 7:1, en particulier de 15:1 à 10:1.

5. Substrat métallique selon l'une des revendications précédentes, **caractérisé en ce que** la moyenne de n dans les silanes de départ de formule générale (I) est de 0,2 à 1,5, en particulier de 0,5 à 1,0.

6. Substrat métallique selon l'une des revendications précédentes, **caractérisé en ce que** le sol de revêtement comprend 0,5 à 30 % en poids, de préférence 5 à 25 % en poids, et de manière particulièrement préférée de 10 à 20 % en poids de pigment oxydique.

7. Substrat métallique selon l'une des revendications précédentes, **caractérisé en ce que** la couche appliquée a été le cas échéant séchée et ensuite condensée thermiquement à une température de 350 à 600°C, de préférence 450 à 500°C.

8. Substrat métallique selon l'une des revendications précédentes, **caractérisé en ce que** l'on effectue, avant ou après la condensation thermique de la couche pigmentée appliquée, un sur-revêtement avec le sol de revêtement contenant un silicate alcalin dépourvu de pigment qui est condensé thermiquement soit conjointement avec la couche pigmentée soit à la suite de celle-ci.

9. Substrat métallique selon l'une des revendications précédentes, **caractérisé en ce que** le composant alcalin du sol de revêtement contenant un silicate alcalin dépourvu de pigment est choisi parmi les combinaisons Na/K, Na/Cs, et Na/Li.

10. Procédé de fabrication d'un substrat métallique selon l'une des revendications précédentes, **caractérisé en ce que** l'on dépose un sol de revêtement contenant un silicate alcalin sur le substrat ou une surface de celui-ci et que la couche ainsi obtenue est condensée thermiquement, dans lequel le sol de revêtement contenant un silicate alcalin comprend un pigment oxydique d'au moins un élément, choisi dans le troisième et quatrième groupe principal ou secondaire du système périodique des éléments chimiques et parmi les métaux de transition Fe, Co, Ni, Cu, Zn, Nb et Ta, et le sol de revêtement contenant un silicate alcalin peut être obtenu par un procédé comprenant l'hydrolyse et la polycondensation d'un ou de plusieurs silanes de formule générale (I)
RₙSiX₄₋ₙ (I)
dans laquelle les groupes X, identiques ou différents, sont des groupes hydrolysables ou des groupes hydroxyle, les résidus R, identiques ou différents, représentent l'hydrogène, les groupes alkyle, alcényle et alcinyle ayant jusqu'à 4 atomes de carbone et les groupes aryle, aralkyle et alkaryle ayant 6 à 10 atomes de carbone, et n représente 0, 1 ou 2, à condition qu'au moins un silane ayant n = 1 ou 2 soit utilisé, ou des oligomères qui en sont dérivés,
en présence de
a) au moins un composé du groupe des oxydes et des hydroxydes de métaux alcalins et alcalino-terreux, où les composés de Na et K sont utilisés, et
b) nanoparticules de SiO₂ le cas échéant ajoutées et/ou
c) alcoxydes le cas échéant ajoutés ou composés solubles des éléments B, Al, Si, Ge, Sn, Y, Ce, Ti ou Zr.

11. Procédé de fabrication d'un substrat métallique selon la revendication 10, **caractérisé en ce que** la couche appliquée est le cas échéant séchée et ensuite condensée thermiquement à une température de 350 à 600°C, de préférence 450 à 500°C.

12. Procédé de fabrication d'un substrat métallique selon l'une des revendications précédentes, **caractérisé en ce que** l'on effectue, avant ou après la condensation thermique de la couche pigmentée appliquée, un sur-revêtement avec le sol de revêtement contenant un silicate alcalin dépourvu de pigment qui est condensé thermiquement soit conjointement avec la couche pigmentée soit à la suite de celle-ci.

13. Procédé de fabrication d'un substrat métallique selon l'une des revendications précédentes, **caractérisé en ce que** la condensation thermique s'effectue en deux étapes, dans lequel le traitement thermique dans la première étape est réalisé dans une atmosphère oxygénée et dans la deuxième étape dans une atmosphère pauvre en oxygène jusqu'à condensation complète en formant une couche vitreuse.

14. Utilisation d'une couche de protection vitreuse ou vitrocéramique pigmentée, pouvant être obtenue par l'application d'un sol de revêtement contenant un silicate alcalin sur un substrat métallique ou une surface de celui-ci et condensation thermique de la couche ainsi obtenue, dans laquelle le sol de revêtement contenant un silicate alcalin comprend un pigment oxydique d'au moins un élément, choisi dans le troisième et quatrième groupe principal ou secondaire du système périodique des éléments chimiques et parmi les métaux de transition Fe, Co, Ni, Cu, Zn, Nb et Ta, comme revêtement résistant aux alcalins ou résistant au lavage en lave-vaisselle.
